# EUROPEAN PATENT APPLICATION

(11) **EP 1 571 655 A1**
(43) Date of publication of application: **07.09.2005**
(21) Application number: 03812677.7
(22) Date of filing: 27.08.2003
(51) Int. Cl.: G11B 5/024

(54) **DEVICE AND METHOD FOR ERASING RECORDED DATA OF MAGNETIC STORAGE**

(30) Priority: 09.12.2002 JP 2002356962
(71) Applicant: Orient Instrument Computer Co., Ltd, Osaka 536-0014 (JP)
(72) Inventor: ITO, Tomoaki c/o Orient Instrument Computer, Joto-ku Osaka-shi Osaka 536-0014 (JP)
(74) Representative: Paul, Dieter-Alfred
(86) International application number: PCT/JP2003/010916
(87) International publication number: WO 2004/053851

(57) **Abstract**

A recorded data eraser for a magnetic storage device for erasing data in the magnetic storage device (M) by a magnetic field generated by a coil (3), into which a capacitor (5) is discharged, has an inductance (H) and an internal resistance (R) of the coil (3) and a predetermined voltage (V) applied to the capacitor (5) set in appropriate amount respectively so as to generate a rebound phenomenon at least once, whereby a direction of the magnetic field is reversed by a reversed current flowing in the coil with a change in polarity of a transient voltage of the discharge of the capacitor into the coil, thereby completely or almost completely erasing recorded data from a storage medium in the magnetic storage device (M)

## Description

### TECHNICAL FIELD

The present invention relates to a recorded data eraser for a magnetic storage device used for erasing data recorded on a storage medium in a magnetic storage device such as a hard disk drive or a magnetic tape cartridge, and to a method thereof.

### BACKGROUND ART

When a hard disk drive is abandoned or reused, for example, data recorded on a hard disk in the hard disk drive are commonly erased in view of preventing leakage of data.

Such erase of recorded data in a hard disk drive is conventionally done by repeatedly writing overwriting data such as "00" over stored data on the hard disk. However, the erasing process by the data overwriting has a problem of heavy workloads and time-consuming. For example, it takes more than 12 hours to erase data of 20 gigabytes.

On the other hand, as an eraser for erasing data on floppy disks and magnetic tapes, which are also recording media, a toroidal coil wound around an outer periphery of a ring-shaped core, arranged in a casing of the eraser body and connected to an AC power source is known (for example, refer to patent document 1).
Patent Document 1: Japanese Patent No. 2545451

The eraser arranges, for example, a floppy disk at an outer face of the eraser body and applies an alternating current to the coil so as to generate an alternating magnetic field, whereby erasing data recorded on the floppy disk.

However, in the case of erasing data, for example, in a hard disk drive by using the eraser, since a hard disk in the drive is accommodated within a metal casing, failing to effectively erase recorded data only with the hard disk drive arranged at an outer face of the eraser and with a magnetic field produced or generated by the eraser.

Taking into such a possible problem, there has been provided a recorded data eraser for a magnetic storage device adapted to erase recorded data in a hard disk drive by an intense magnetic field (e.g., about 7,000 gauss) generated by a coil arranged within the eraser body.

The recorded data eraser described above includes a coil for generating a magnetic field in a portion where a hard disk drive is set, connects a capacitor charged to a predetermined direct-current voltage in parallel with the coil, and turns on a switching device interposed between the capacitor and the coil so as to discharge the capacitor into the coil, which generates a magnetic field, whereby stored data on a hard disk in the drive placed within the magnetic field is erased.

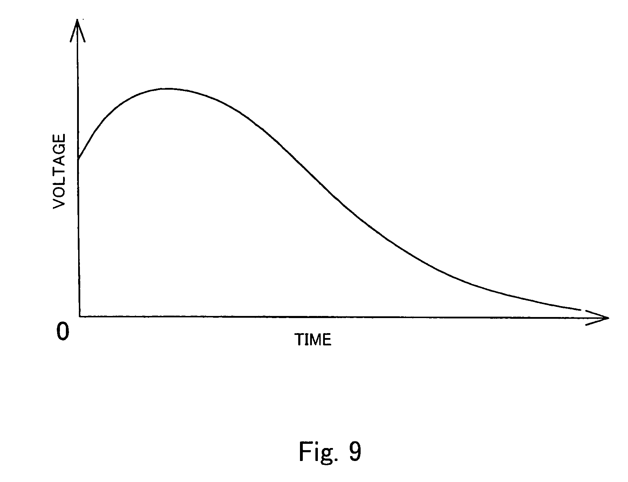

However, since the eraser of the provision, as seen in Fig. 9, causes an aperiodic damping of a transient voltage of a discharge of the capacitor into the coil, only unidirectional magnetic field lines flow in the hard disk drive within the magnetic field, resulting in the drive magnetized unidirectionally. In other words, the disk is not completely demagnetized with the result of a low erasing effect of data.

It is therefore an object of the present invention made in view of such technical background to provide an improved recorded data eraser for a magnetic storage device erasing recorded data with certainty by a complete demagnetization of a storage medium in the magnetic storage device.

### SUMMARY OF THE INVENTION

It is therefore a solution of the problem described above to provide a recorded data eraser for a magnetic storage device including a coil for generating a magnetic field, a capacitor charged to a predetermined DC voltage and connected in parallel with the coil, and a switching device interposed between the capacitor and the coil, the switching device being controllable to discharge the capacitor into the coil, by which the magnetic field is generated so as to erase stored data in the device, wherein the coil has an inductance and an internal resistance, and wherein the inductance and the internal resistance of the coil and the predetermined voltage applied to the capacitor are set in appropriate amount respectively so as to generate a rebound phenomenon at least once, whereby a direction of the magnetic field is reversed by a reversed current flowing in the coil with a change in polarity of a transient voltage of the discharge of the capacitor into the coil.

In the data eraser, turning on the switching device, with the capacitor charged to the predetermined DC voltage, discharges the capacitor into the coil, by which the magnetic field is generated from the coil, thereby exerting magnetic force on a magnetic storage device placed within the magnetic field.

At this time, since the inductance and the internal resistance of the coil and the predetermined voltage applied to the capacitor are set in appropriate amount respectively so as to generate a rebound phenomenon at least once, whereby a direction of the magnetic field is reversed by a reversed current flowing in the coil with a change in polarity of a transient voltage of the discharge of the capacitor into the coil, an inverse direction magnetic field is generated from the coil in response to the rebound phenomenon after generation of a unidirectional magnetic field by the first discharge, and these magnetic fields act on the device, so that a storage medium in the device is not magnetized and is demagnetized completely or almost completely, thereby ensuring that an erasing effect of data is performed higher.

It is preferable that the inductance of the coil is maintained within the range of 100H to 200H, the internal resistance of the coil within the range of 2.5 ohm (2.5Ω) to 5 ohm (5Ω), and the capacity of the capacitor within the range of 4,700 microfarad (4,700µF) to 9,400 microfarad (9,400µF).

Setting of each element within the range described above generates the rebound phenomenon at least once.

Further, the eraser may be provided with a casing of a box shape made of magnetic body accommodating the coil therewithin,

The box-shaped casing increases and equalizes a magnetic flux density in the coil by the magnetic field generated by the coil.

Still further, it is preferable that the coil is formed by a wire whose diameter is 1.2mm or more.

Yet further, the capacitor preferably has a withstand voltage of 300V or more.

The problem described above is also solved by a method of erasing recorded data for a magnetic storage device including the steps of providing a capacitor charged to a predetermined DC voltage, providing a coil for generating a magnetic field, connecting the capacitor to the coil in parallel, interposing a switching device between the capacitor and the coil, and controlling the switching device so as to discharge the capacitor into the coil for generating the magnetic field so as to erase stored data in the device, wherein the discharge of the capacitor into the coil generates a rebound phenomenon at least once, whereby a direction of the magnetic field is reversed by a reversed current flowing in the coil with a change in polarity of a transient voltage of the discharge.

In the method, setting of an inductance and an internal resistance of the coil and a predetermined voltage applied to the capacitor in appropriate amount respectively generates an inverse direction magnetic field to the magnetic field generated by the first discharge, in response to the rebound phenomenon, so that data in the magnetic storage device is erased with certainty.

### BRIEF DESCRIPTION OF THE DRAWINGS

Fig. 1 is a partially broken side view of a recorded data eraser for a magnetic storage device that is an embodiment of the present invention;
Fig. 2 is an exploded perspective view of the data eraser;
Fig. 3 is an electrical circuit diagram in the data eraser;
Fig. 4 is a transient voltage and time characteristic diagram of a discharge in the first embodiment;
Fig. 5 is a transient voltage and time characteristic diagram of a discharge in the second embodiment;
Fig. 6 is a transient voltage and time characteristic diagram of a discharge in the third embodiment;
Fig. 7 is a transient voltage and time characteristic diagram of a discharge in the fourth embodiment;
Fig. 8 is a transient voltage and time characteristic diagram of a discharge in the fifth embodiment; and
Fig. 9 is a transient voltage and time characteristic diagram of a discharge in the conventional art.

### DESCRIPTION OF THE PREFERRED EMBODIMENTS

Now, a preferred embodiment of the present invention will be described below, making reference to the accompanying drawings.

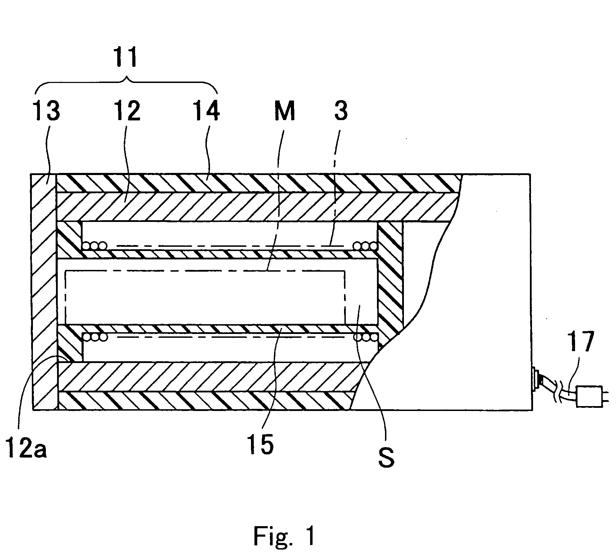

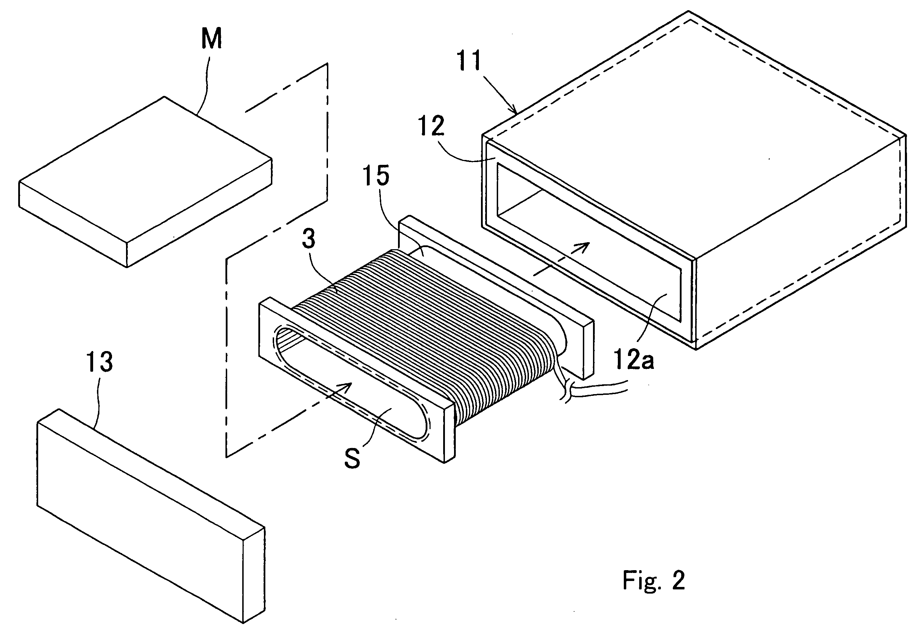

Fig. 1 is a partially broken side view of a recorded data eraser for a magnetic storage device that is an embodiment of the present invention, and Fig. 2 is an exploded perspective view of the data eraser.

Referring to Figs. 1 and 2, the reference numeral 11 denotes a main body 11 of the eraser. The main body 11, for example, consists essentially of a casing 12 of a box shape with its front end open, a lid 13 for closing the opening 12a of the casing 12 openably and closably, and an outer covering 14 of a box shape made of plastics with its front end open covering an outer surface of the casing 12. Herein, at least the casing 12 (in the preferred embodiment, the casing 12 and the lid 13) is made of magnetic material such as iron and nickel and has functions of increasing and equalizing a magnetic flux density within a coil 3 described below of a magnetic field generated by the coil 3 so that the magnetic flux acts on a hard disk drive (M).

The casing 12 accommodates a hollow coil spool 15 with the coil 3 wound around the outer periphery of the coil spool 15 forming a multiplicity of loops toward a longitudinal direction of the spool. The coil 3 has a function of generating the magnetic field for erasing data stored on a hard disk (not shown) in the hard disk drive (M).

An internal space of the coil spool 15 functions as a cavity (S) for an insertion of the hard disk drive (M). In other words, the magnetic field generated by the coil 3 acts on the drive (M) inserted in the insertion cavity (S). Herein, the lid 13 may be mounted to the casing 12, for example, at the end of the casing 12 having the opening with the known hinge or the like.

A power cord 17 for connecting with a commercial alternating-current (AC) power source described above is pulled out from the casing 12.

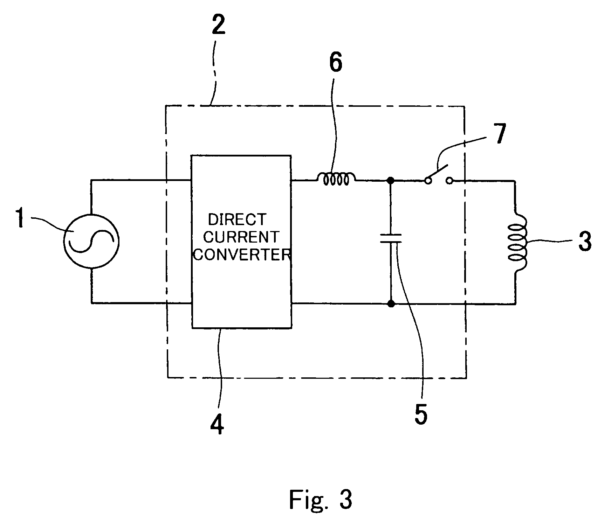

Now an electrical structure in the data eraser will be described in detail making reference to Fig. 3.

Referring to Fig. 3, the reference numeral 1 denotes the commercial AC power source, to which the coil 3 is connected via a direct-current (DC) power supply circuit 2.

The DC power supply circuit 2 includes a direct-current (DC) converter 4 connected to the commercial AC power source 1 at its input side, a capacitor 5 connected in parallel to an output side of the DC converter 4, an reactor 6 interposed in an input line (a higher potential side) from the DC converter 4 to the capacitor 5, and a switching device 7.

The DC converter 4 converts an electric current of the commercial AC power source 1 into a direct current of a predetermined voltage, and is formed, for example, by a boost chopper. The capacitor 5 is connected to the coil 3 in parallel, and is charged to a direct-current voltage from the DC converter 4. The reactor 6 has a function of removing ripple components on the direct current from the DC converter 4.

The switching device 7, which is formed by such as a bidirectional thyristor and is interposed between the condenser 5 and the coil 3, is turned on upon reception of a trigger signal so as to discharge the capacitor 5 into the coil 3. The coil 3 generates a magnetic field by a current flow of the discharge therein within the cavity (S) where the hard disk drive (M) is inserted.

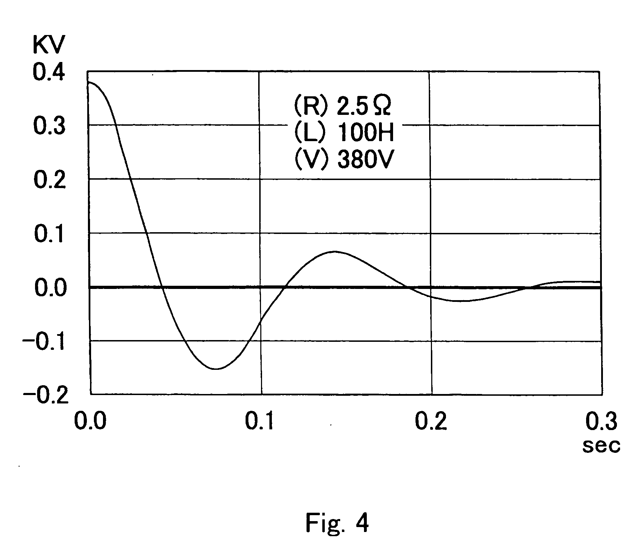

An inductance (H) and an internal resistance (R) of the coil 3, and a predetermined voltage (V) applied to the capacitor 5, and optionally a capacity (F) of the capacitor 5 are determined in appropriate amount respectively so as to generate a rebound phenomenon (refer to Figs. 4 to 8) at least once, whereby a direction of the magnetic field is reversed by a reversed current flowing in the coil with a change in polarity of a transient voltage of the discharge of the capacitor 5 into the coil 3. For example, the coil 3 has a wire diameter of 1.2 mm or more, its inductance (H) set within the range of 100H to 200H, and its internal resistance (R) within the range of 2.5 ohm to 5 ohm. The voltage (V) applied to the capacitor 5 is 300 V or more. The capacity (F) of the capacitor 5 is set within the range of 4,700 microfarad to 9,400 microfarad.

Now an operation of the recorded data eraser constituted in a way described above is described in detail below.

With the switching device 7 of the DC power supply circuit 2 off (viz. open), the eraser is connected to the commercial AC power source 1. Thereafter, a hard disk drive (M) whose stored data is to be erased is inserted in the cavity (S) and the lid 13 is closed.

At this time, the capacitor 5 of the DC power supply circuit 3 is charged to an electric power supply from the DC converter 4. In this state, turning on (viz. close) the switching device 7 discharges the capacitor 5 into the coil 3 and the discharge generates a magnetic field in the internal space of the coil 3, that is, the insertion cavity (S) where the hard disk drive (M) is inserted. Magnetic field lines produced by the magnetic field penetrate the metal casing made of aluminum or iron of the drive (M), thereby erasing data including cylinder information recorded on the hard disk that is a recording medium.

When the capacitor 5 discharges into the coil 3, a rebound phenomenon, whereby a direction of the magnetic field is reversed by a reversed current flowing in the coil with a change in polarity of a transient voltage, is generated at least once (for example, in Fig. 4, substantially four times). Therefore, not only a unidirectional magnetic field generated by the first discharge but also its inverse direction magnetic field act on a hard disk in the hard disk drive (M), thereby demagnetizing the disk completely or almost completely and increasing its erasability of data considerably.

After a predetermined time duration, the switching device 7 is turned off (viz. open) so as to be ready for the next data erase. Duration in which the magnetic field is generated by the coil 3, in other words, duration in which the switching device 7 is turned on, is not limited particularly, but preferably set for 10 ms or less. Even if the duration exceeds 10 ms, it achieves the same erasing effect of data, or rather lowers energy efficiency and wastes time.

The hard disk drive (M) whose data has been erased as described above is ejected from the insertion cavity (S), and abandoned or reused, depending on need.

Herein, it is required to exert more intense magnetism than a written magnetism for erasing written data in the hard disk drive (M). From this view, the more intense the magnetism generated by the coil 3 that acts on the cavity (S) is the better. However, to guarantee its reuse without a destruction of a controlling portion (not shown) incorporated in the drive (M), an intensity of the magnetic field is preferably set within the range of 6,000 to 15,000 gauss at a magnetic flux density. The magnetic flux density less than 6,000 gauss is inadequate to erase data, and the density more than 15,000 gauss destroys the controlling portion. More preferably, it is within the range of 8,000 to 13,000 gauss.

The intensity of the magnetic field generated by the coil 3 is readily adjustable depending on change of the number of winding of the coil and a current applied to the coil.

Now, preferred embodiments to corroborate erasing effects of data are described in detail below. In each embodiment, the inductance (H) of the coil 3, its internal resistance (R), and the voltage (V) applied to the capacitor 5 are respectively determined in appropriate amount so as to effectively erase the stored data, and the rebound phenomenon is measured respectively by a relationship between the transient voltage and time.

### [FIRST EMBODIMENT]

An eraser of the first embodiment was set with a diameter of the coil 3 of 1.2 mm or more, its internal resistance of 2.5 ohm, the inductance of the coil 3 of 100H, the voltage applied to the capacitor 5 of 380V, and the capacity of the capacitor 5 of 4,700 microfarad.

In measuring the transient voltage and time characteristic of the discharge under this condition, as seen in Fig. 4, substantially four times of the rebound phenomena were generated by a discharge. In this case, recorded data on the hard disk in the hard disk drive was completely erased.

### [SECOND EMBODIMENT]

An eraser of the second embodiment was set with the diameter of the coil 3 of 1.2 mm or more, its internal resistance of 5 ohm, the inductance of the coil 3 of 200H, the voltage applied to the capacitor 5 of 380V, and the capacity of the capacitor 5 of 4,700 microfarad.

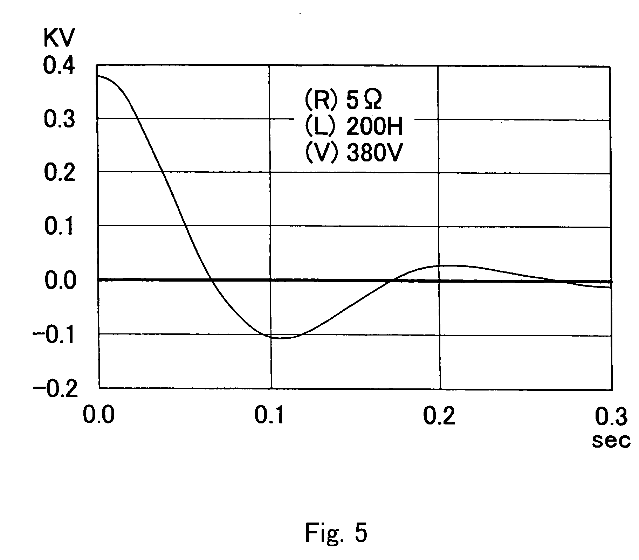

In measuring the transient voltage and time characteristic of the discharge under this condition, as seen in Fig. 5, substantially three times of the rebound phenomena were generated by a discharge. In this case, recorded data on the disk in the drive was also completely erased.

### [THIRD EMBODIMENT]

An eraser of the third embodiment was set with the diameter of the coil 3 of 1.2 mm or more, its internal resistance of 5 ohm, the inductance of the coil 3 of 100H, the voltage applied to the capacitor 5 of 1,000V, and the capacity of the capacitor 5 of 9,400 microfarad.

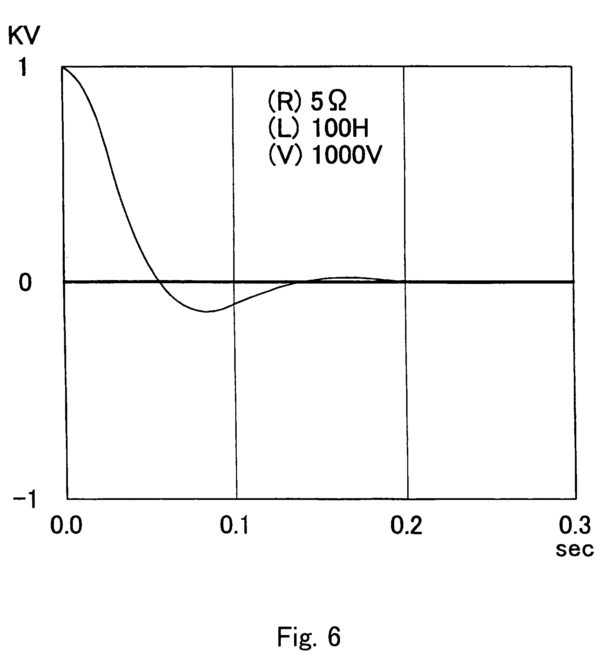

In measuring the transient voltage and time characteristic of the discharge under this condition, as seen in Fig. 6, substantially a little less than twice of the rebound phenomena were generated by a discharge. In this case, recorded data on the disk in the drive was also erased with a high accuracy.

### [FOURTH EMBODIMENT]

An eraser of the fourth embodiment was set with the diameter of the coil 3 of 1.2 mm or more, its internal resistance of 5 ohm, the inductance of the coil 3 of 200H, the voltage applied between the both ends of the capacitor 5 of 800V, and the capacity of the capacitor 5 of 9,400 microfarad.

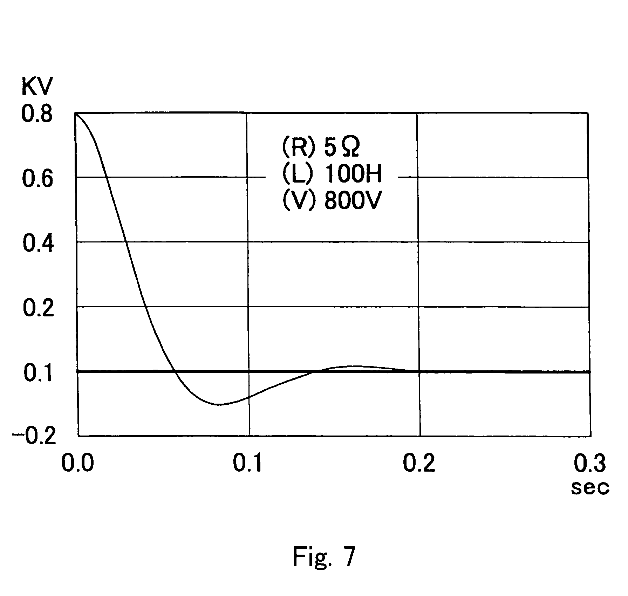

In measuring the transient voltage and time characteristic of the discharge under this condition, as seen in Fig. 7, substantially twice of the rebound phenomena were generated by a discharge. In this case, recorded data on the disk in the drive was also erased with a high accuracy.

### [FIFTH EMBODIMENT]

An eraser of the fifth embodiment was set with the diameter of the coil 3 of 1.2 mm or more, its internal resistance of 5 ohm, the inductance of the coil 3 of 100H, the voltage applied between the both ends of the capacitor 5 of 380V, and the capacity of the capacitor 5 of 4,700 microfarad.

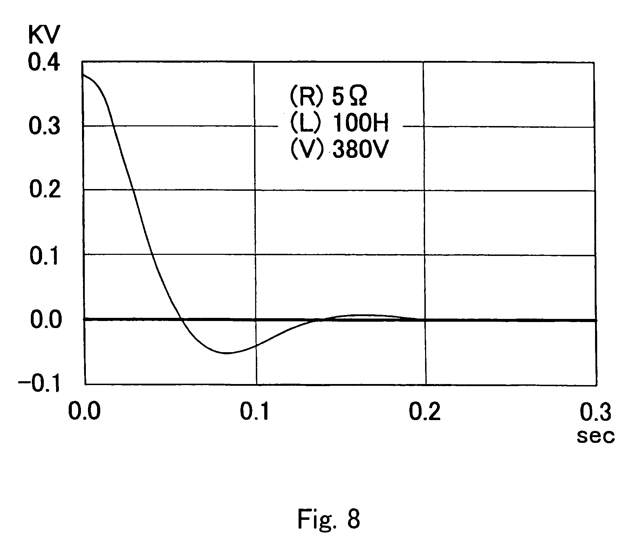

In measuring the transient voltage and time characteristic of the discharge under this condition, as seen in Fig. 8, substantially twice of the rebound phenomena were generated by a discharge. In this case, recorded data on the disk in the drive was also erased with a high accuracy.

The embodiments 1 to 5 have shown that the rebound of the transient voltage of the discharge enables recorded data to be erased excellently. Especially, as shown in Fig. 1, it was revealed that a several times of rebounds provided the remarkably effective erasing effect of data.

As described above, since the present invention is constituted so as to generate a rebound phenomenon at least once, whereby a direction of a magnetic field is reversed by a reversed current flowing in a coil with a change in polarity of a transient voltage of a discharge of a capacitor, in response to the rebound phenomenon, an inverse direction magnetic field to the magnetic field generated by the first discharge demagnetizes a storage medium in a magnetic storage device completely or almost completely and increases its erasability of data considerably.

### INDUSTRIAL APPLICABILITY

The present invention is a recorded data eraser for a magnetic storage device used for erasing data recorded on a storage medium storing data by magnetism such as a hard disk drive, a magnetic tape, and a floppy disk, and a method thereof.

## Claims

1. A recorded data eraser for a magnetic storage device comprising:
a coil for generating a magnetic field;
a capacitor charged to a predetermined DC voltage and connected in parallel with the coil; and
a switching device interposed between the capacitor and the coil;
the switching device being controllable to discharge the capacitor into the coil, by which the magnetic field is generated so as to erase stored data in the device;
wherein the coil has an inductance and an internal resistance; and
wherein the inductance and the internal resistance of the coil and the predetermined voltage applied to the capacitor are set in appropriate amount respectively so as to generate a rebound phenomenon at least once, whereby a direction of the magnetic field is reversed by a reversed current flowing in the coil with a change in polarity of a transient voltage of the discharge of the capacitor into the coil.

2. The recorded data eraser as defined in claim 1,
wherein the inductance of the coil is maintained within the range of 100H to 200H, the internal resistance of the coil within the range of 2.5 ohm to 5 ohm, and the capacity of the capacitor within the range of 4,700 microfarad to 9,400 microfarad.

3. The recorded data eraser as defined in claim 1 or 2, further comprising a casing of a box shape made of magnetic material accommodating the coil therewithin.

4. The recorded data eraser as defined in one of claims 1 to 3,
wherein the coil is arranged by a wire whose diameter is 1.2 mm or more.

5. The recorded data eraser as defined in one of claims 1 to 4,
wherein the capacitor has a withstand voltage of 300V or more.

6. A method of erasing recorded data for a magnetic storage device comprising:
providing a capacitor charged to a predetermined DC voltage;
providing a coil for generating a magnetic field;
connecting the capacitor with the coil in parallel;
interposing a switching device between the capacitor and the coil; and
controlling the switching device so as to discharge the capacitor into the coil for generating the magnetic field so as to erase stored data in the device;
wherein the discharge of the capacitor into the coil generates a rebound phenomenon at least once, whereby a direction of the magnetic field is reversed by a reversed current flowing in the coil with a change in polarity of a transient voltage of the discharge.
